# EUROPÄISCHE PATENTANMELDUNG

(11) **EP 3 069 773 A2**
(43) Veröffentlichungstag der Anmeldung: **21.09.2016**
(21) Anmeldenummer: 16160357.6
(22) Anmeldetag: 15.03.2016
(51) Int. Cl.: B01D 35/28, E03F 5/14, F16L 55/24

(54) **FILTERVORRICHTUNG FÜR EINE FÖRDERANLAGE ZUR FÖRDERUNG VON SPERR- UND/ODER FESTSTOFFHALTIGEN FLÜSSIGKEITEN**

(30) Priorität: 16.03.2015 DE 102015103808
(71) Anmelder: STRATE Technologie für Abwasser GmbH, 31157 Sarstedt (DE)
(72) Erfinder: Demmig, Detlev, 38723 Seesen (DE)
(74) Vertreter: Patentanwälte Thömen & Körner

(57) **Zusammenfassung**

Die Erfindung betrifft eine Filtervorrichtung zur Filterung von sperr- und/oder feststoffhaltigen Flüssigkeiten, insbesondere Abwässern und eine Förderanlage, insbesondere Abwasserhebeanlage, zur mehrgerichteten, insbesondere zweigerichteten, Förderung von sperr- und/oder feststoffhaltigen Flüssigkeiten, insbesondere Abwässern, wobei die Förderanlage eine Filtervorrichtung zur Filterung von sperrund/oder feststoffhaltigen Flüssigkeiten, insbesondere Abwässern umfasst und die Filtervorrichtung wenigstens ein Filterelement, wobei das wenigstens eine Filterelement wenigstens ein Rückhalteelement umfasst, umfasst.

## Beschreibung

Die Erfindung betrifft eine Filtervorrichtung nach dem Oberbegriff des Anspruchs 1 und eine Förderanlage nach dem Oberbegriff des Anspruchs 15.

Bei der Förderung von sperr- und/oder feststoffhaltigen Flüssigkeiten durch Rohrleitungen mittels einer Pumpe können die Sperr- und/oder Feststoffe in die Pumpe gelangen und so dazu führen, dass die Förderleistung verringert oder die Pumpe im schlimmsten Fall festgesetzt oder beschädigt wird.

Aus diesem Grund ist es wichtig, die Sperr- und/oder Feststoffe an einem Eindringen in die Pumpe zu hindern. Dazu werden Filtervorrichtungen in den Förderstrom derart eingebaut, dass die Sperr- und/oder Feststoffe zurückgehalten werden und somit die sperr- und/oder feststoffhaltige Flüssigkeit zumindest teilweise von den Sperr- und/oder Feststoffen gereinigt wird.

Eine spezielle Ausführungsform von Förderanlagen zur Förderung von sperr- und/oder feststoffhaltigen Flüssigkeiten bilden Abwasserhebeanlagen.

Abwasserhebeanlagen dienen dazu, z. B. in Ein- oder Mehrfachfamilienhäusern, in Gaststätten oder in öffentlichen Gebäuden anfallendes Abwasser aufzunehmen und von einem niedrigen Niveau aus über eine Druckrohrleitung auf ein höheres Niveau in eine Kanalisation zu pumpen.

Bei den bekannten Abwasserhebeanlagen wird das Abwasser zunächst mittels einer Pumpe einem Sammelbehälter zugeführt, und wenn dieser Sammelbehälter gefüllt ist, wird die Pumpe eingeschaltet um den Sammelbehälter zu entleeren und das Abwasser in die Druckrohrleitung zu fördern.

Dabei ist in der Praxis zu beachten, dass sich im Abwasser üblicherweise Sperr- und/oder Feststoffe befinden, die in den Haushalten zunehmend in das Abwasser gebracht werden.

Um zu verhindern, dass diese Sperr- und/oder Feststoffe beim Befüllen des Sammelbehälters durch die Pumpe fließen und deren Funktion negativ beeinträchtigen oder den Betrieb der Pumpe sogar unmöglich machen, ist vor der Pumpe eine Filtervorrichtung vorgesehen. Durch diese Filtervorrichtung werden die im Abwasser befindlichen Sperr- und/oder Feststoffe weitestgehend zurückgehalten.

Es erfolgt also eine gewisse Vorreinigung des Abwassers und es wird verhindert, dass die Sperr- und/oder Feststoffe durch die Pumpe in den Sammelbehälter fließen. Die Vorreinigung hat zur Folge, dass sich die Sperr- und/oder Feststoffe im Bereich vor der Filtervorrichtung ansammeln. Dieser Bereich bildet einen Sperrstoffsammelraum.

Wenn der gefüllte Sammelbehälter mittels der Pumpe entleert und das vorgereinigte Abwasser durch die Filtervorrichtung hindurch und durch den Sperrstoffsammelraum in die Druckrohrleitung gepumpt wird, werden die im Sperrstoffsammelraum befindlichen Sperr- und/oder Feststoffe durch den Reinigungsstrom mitgerissen und können so in die Kanalisation gelangen.

In der DE 20 2008 011 273 U1 ist eine Abwasserhebeanlage beschrieben, bei der zum Schutz der Pumpe vor Sperr- und/oder Feststoffen eine kombinierte Absperr-/Filtereinrichtung räumlich zwischen einem Sperrstoffsammelraum und einer Pumpe angeordnet ist. Die kombinierte Absperr-/Filtereinrichtung ist als Baueinheit aus einer Absperrklappe und einem Filter ausgeführt. Wobei der Filter aus einzelnen Stäben besteht, die parallel zur Reinigungsstromrichtung angeordnet sind. Im geschlossenen Zustand liegt die Absperrklappe derart an den Stäben des Filters an, dass das Abwasser lediglich über den Filter in Richtung Pumpe gelangen kann.

Ein Nachteil der bekannten Filtervorrichtung in Form der Trennklappe besteht darin, dass durch die Bildung des Spaltes der Querschnitt der zur Pumpe führenden Öffnung erheblich verringert wird. Dadurch wird zum einen die Durchflussmenge des zum Sammelbehälter fließenden Abwassers verringert, und zum anderen stellt sich an der Verengung des Spaltes eine erhöhte Strömungsgeschwindigkeit ein.

Die Verringerung der Durchflussmenge kann bei großem Anfall von Abwasser oder bei starkem Regen zu Problemen führen, wenn sich der Sammelbehälter nicht schnell genug befüllen lässt. Die erhöhte Strömungsgeschwindigkeit im Spalt kann dazu führen, dass Fest- und/oder Sperrstoffe durch eine Sogwirkung durch den Spalt hindurch in die Pumpe gelangen.

Eine Beschädigung der Absperr-/Filtervorrichtung muss durch eine aufwendige Reparatur vor Ort behoben werden. Während dieser Reparaturarbeiten kann die Abwasserhebeanlage nicht betrieben werden

Darüber hinaus hat die Absperr-/Filtereinrichtung einen vergleichsweise großen Platzbedarf in der Abwasserhebeanlage. Dies ist hauptsächlich auf die Absperrklappe zurückzuführen, die angelenkt gelagert ist und für die Rotationsbewegung um ihr Lager einen entsprechend großen Platzbedarf aufweist.

In dem Dokument EP 2 581 508 Filtervorrichtung beschrieben, die von außen frei zugänglich ist, wodurch eventuelle Reparatur- oder Wartungsarbeiten erleichtert werden. Diese bekannte Filtervorrichtung umfasst ein Filterelement, die sich über den gesamten Querschnitt des vom Sperrstoffsammelraum zum Sammelbehälter fließenden Abwassers erstreckt, so dass sich der Sammelbehälter bei größerem Anfall von Abwasser besser befüllen lässt.

Bei der bekannten Filtervorrichtung ist das Filterelement auswechselbar und nach Art eines Gitters ausgestaltet, wobei das Gitter durch eine Vielzahl von Streifen gebildet wird. Die Streifen sind nach Art eines Kammes mit Lücken und Zähnen versehen. Dabei ist eine erste Gruppe von Streifen waagerecht parallel im Abstand zueinander angeordnet und eine zweite Gruppe von Streifen senkrecht zu den Streifen der ersten Gruppe, wobei jede Lücke jedes Streifens der ersten Gruppe in jeweils eine Lücke eines Streifens der anderen Gruppe eingreift.

Durch dieses Filterelement wird eine Vielzahl von in Strömungsrichtung des Abwassers verlaufenden Durchflusskanälen gebildet, die sich über den gesamten Strömungsquerschnitt des durch die Filtervorrichtung fließenden Abwassers erstrecken. In ihrer Gesamtheit bilden die Durchflusskanäle ein Filter, wobei jeder Durchflusskanal eine Filteröffnung darstellt. Durch ein solches Filterelement lassen sich die im Abwasser befindlichen Sperr- und/oder Feststoffe in großem Maße zurückhalten, so dass das in den Sammelbehälter fließende Abwasser mehr oder weniger vollständig von diesen Stoffen gereinigt ist.

Der vorteilhaften Filterwirkung der bekannten Filtervorrichtung steht in der Praxis jedoch in nachteiliger Weise die Gefahr entgegen, dass sich das Filterelement nach längerer Zeit mit den Sperr- und/oder Feststoffen zusetzen und verstopfen kann. Dann ist es erforderlich, wenigstens eine der beiden Filtervorrichtungen einer Abwasserhebeanlage, wenn nicht gar die komplette Abwasserhebeanlege, kurzfristig außer Betrieb zu nehmen und das auswechselbare Filterelement zu reinigen oder durch ein neues sauberes Filterelement zu ersetzen.

Darüber hinaus ist das Filterelement in einem Filterkasten angeordnet, der einen vergleichsweise großen Platzbedarf in der Abwasserhebeanlage aufweist. Der Filterkasten ist zudem mit Dichtelementen versehen, welche das Filterelement und den das Filterelement durchdringenden Abwasserstrom nach außen abdichtet.

Der vorliegenden Erfindung liegt somit die Aufgabe zugrunde, die genannten Probleme bei der Förderung von sperr- und/oder feststoffhaltigen Flüssigkeiten zu beseitigen und insbesondere eine Filtervorrichtung insbesondere als Element einer Förderanlage bereit zu stellen, die eine ausreichend große durchströmbare Querschnittsfläche aufweist, durch lediglich kurzfristige Abschaltung der Förderanlage austauschbar ist, einen geringen Platzbedarf aufweist und einfach nachrüstbar ist.

Diese Aufgabe wird bei einer Filtervorrichtung nach dem Oberbegriff des Anspruchs 1 durch die kennzeichnenden Merkmale des Anspruchs 1 gelöst. Weiterbildungen und vorteilhafte Ausgestaltungen ergeben sich aus den abhängigen Ansprüchen.

Die erfindungsgemäße Filtervorrichtung zur Filterung von sperr- und/oder feststoffhaltigen Flüssigkeiten, insbesondere Abwässern umfasst wenigstens ein Filterelement, wobei das wenigstens eine Filterelement wenigstens ein Rückhalteelement umfasst und die Filtervorrichtung von der sperr- und/oder feststoffhaltigen Flüssigkeit durchströmbar ist und das Filterelement ein Dichtelement, insbesondere zum Abdichten einer Flanschverbindung zwischen zwei Flanschen, aufweist und das Filterelement in einer Durchströmungsrichtung eine geringe Ausdehnung bzw. das Filterelement eine geringe Dicke, bevorzugt zwischen 1 mm und 30 mm, besonders bevorzugt zwischen 2 mm und 20 mm und ganz besonders bevorzugt zwischen 3 mm und 10 mm, aufweist.

Als Abwasser wird in diesem Zusammenhang jede sperr- und/oder feststoffhaltigen Flüssigkeit verstanden, bei der die Sperr- und/oder Feststoffe beim Eindringen in eine Pumpe in der Lage sind, die Pumpe negativ zu beeinträchtigen, insbesondere zu beschädigen. Dabei fallen unter den Begriff Sperrstoffe auch beispielweise flexible Stoffe wie unter anderem faserige Stoffe, insbesondere Toilettenpapier, Taschentücher, Damenbinden, Babytücher oder dergleichen.

Unter dem Begriff Durchströmungsrichtung wird im Sinne der Erfindung die Bewegung der Flüssigkeit parallel zur Flächensenkrechten des Filterelements bzw. der Filtervorrichtung verstanden. Dabei kann die Durchströmungsrichtung in zwei Teilströmungen unterteilt werden und zwar in eine vom Filterelement aus betrachteten Strömungsrichtung hin zur Pumpe, der Filterstromrichtung und einer vom Filterelement aus betrachteten Strömungsrichtung weg von der Pumpe, der Reinigungsstromrichtung.

Der Stand der Technik offenbart lediglich Filtervorrichtungen, die großräumig in die Abwasserhebeanlagen analog zu DE 20 2008 011 273 U1 integriert sind und zumeist ein Seitenelement eines Sperrstoffsammelraums bilden. Oder Filtervorrichtungen, die in einer Durchflussrichtung eine große räumliche Ausdehnung aufweisen. Filtervorrichtungen, die in analoger Weise zu DE 20 2008 011 273 U1 in Abwasserhebeanlagen integriert sind, bedürfen in der Regel keiner zusätzlichen Abdichtung. Sollte dagegen die Filtervorrichtung in Filterstromrichtung vor der Pumpe innerhalb der Rohrleitung angeordnet sein, so geschieht dies zumeist in analoger weise zu EP 2 581 508 A1 indem ein abgedichtetes Gehäuse in die Rohrleitung integriert wird, indem das Filterelement angeordnet ist.

Wie die Filtervorrichtung der EP 2 581 508 A1 wird die erfindungsgemäße Filtervorrichtung in die Rohrleitung in Filterstromrichtung vor der Pumpe integriert. Im Gegensatz zur EP 2 581 508 A1 bedarf die erfindungsgemäße Filtervorrichtung jedoch nicht eines Gehäuses und auch keiner zusätzlichen Abdichtung, da das Dichtelement fest mit den Rückhalteelementen verbunden ist.

Aufgrund des vorhandenen Dichtelements kann die erfindungsgemäße Filtervorrichtung anstelle oder zusätzlich zu einer Dichtung in die Abwasserhebeanlage integriert werden. Des Weiteren weisen die einzelnen erfindungsgemäßen Filterelemente eine geringe Ausdehnung entlang der Durchströmungsrichtung der Filtervorrichtung auf. Je nach den vorliegenden Gegebenheiten ist es somit möglich die Anzahl der Filterelemente innerhalb der Filtervorrichtung oder die Dicke eines Filterelements derart anzupassen, dass die Filtervorrichtung unter den gegebenen Voraussetzungen verbaut oder in einer Bestandsanlage nachgerüstet werden kann.

Dabei beschränkt sich der Einsatz der erfindungsgemäßen Filtervorrichtung nicht auf Abwasserhebeanlagen, sondern kann prinzipiell in jeder Förderanlage eingesetzt werden, die eine Verbindung, beispielsweise eine Flanschverbindung, aufweist, die mittels einer Dichtung abgedichtet wird.

Es ist vorteilhaft, wenn wenigstens das Dichtelement aus einem elastischen Material, insbesondere aus Gummi, vorteilhafterweise aus EPDM, besteht.

Das Dichtelement dient hauptsächlich dazu, eine vorhandene Dichtung einer Förderanlage, in welche die Filtervorrichtung eingebaut werden soll zu ersetzen. Aus diesem Grund ist es vorteilhaft, wenn es sich bei dem Material des Dichtelements um ein Material handelt, das gute abdichtende Eigenschaften, wie beispielsweise ein elastisches Material und insbesondere Gummi hat.

Des Weiteren sind an dem Dichtelement direkt oder mittels Verbindungselementen, wie insbesondere den Schalelementen, die Rückhalteelemente angeordnet. Aufgrund der Strömung innerhalb einer Förderanlage wirken erhöhte Kräfte auf die Rückhalteelemente. Damit die Rückhalteelemente nicht aus dem Dichtelement herausgerissen oder von diesem abgerissen werden, muss das Material der Dichtelemente zudem eine erhöhte Reißfestigkeit aufweisen.

Als vorteilhaft für diese Aufgabe hat sich insbesondere Gummi, vorteilhafterweise EPDM herausgestellt.

Vorteilhafterweise weist das Dichtelement eine durchgehende Öffnung auf und das wenigstens eine Rückhalteelement oder wenigstens eines der Rückhalteelemente ist innerhalb dieser durchgehenden Öffnung derart anordbar, dass eine von der Flüssigkeit durchströmbare Querschnittsfläche der durchgehenden Öffnung verringert wird.

Damit die Flüssigkeit innerhalb der Rohrleitung und insbesondere zur Pumpe und weg von der Pumpe transportiert werden kann, muss das Dichtelement eine durchströmbare Querschnittsfläche aufweisen, durch welche die Flüssigkeit die Filtervorrichtung durchfließen kann.

Dagegen ist es die Aufgabe der Rückhalteelemente die Sperr- und/oder Feststoffe aus der Flüssigkeit zu filtern. Um die Sperr- und/oder Feststoffe aus der Flüssigkeit filtern zu können, muss die durchströmbare Querschnittsfläche der durchgehenden Öffnung innerhalb des Dichtelements derart verringert werden, dass die Sperr- und/oder Feststoffe die Filtervorrichtung nicht durchdringen können und zurückgehalten werden.

Dabei können die Rückhalteelemente einteilig bzw. einstückig mit dem Dichtelement ausgebildet sein oder mittels eines Verbindungselements mit dem Dichtelement verbindbar sein.

Als durchgehende Öffnung des Dichtelements wird im Sinne der Erfindung die von der Innenkontur des Dichtelements nach außen begrenzte Fläche ohne die Anordnung von Rückhalteelementen aufgefasst. Dagegen wird als durchströmbare Querschnittsfläche der durchgehenden Öffnung bzw. des Filterelements bzw. der Filtervorrichtung der Bereich bezeichnet, der in Draufsicht auf ein Filterelement oder die Filtervorrichtung nicht von dem oder den vorhandenen Dichtelementen und/oder dem oder den vorhandenen Rückhalteelementen bedeckt ist.

Zweckmäßigerweise ist das wenigstens eine Rückhalteelement oder wenigstens eines der vorhandenen Rückhalteelemente derart innerhalb der durchgehenden Öffnung anordbar, dass dieses von einer Innenkontur des Dichtelements ausgehend sich radial in Richtung eines Mittelpunkts des Dichtelements fortbildet.

Die durchgehende Öffnung innerhalb eines Dichtelements wird durch die Innenkontur des Dichtelements begrenzt und definiert somit die maximal durchströmbare Querschnittsfläche eines Filterelements. An die Innenkontur des Dichtelements schließt sich abschnittsweise das Rückhalteelement an und ragt derart in die durchgehende Öffnung des Dichtelements, so dass die durchströmbare Querschnittsfläche des Filterelements verringert wird. Die Enden des Rückhalteelement als Basis und als Spitz bezeichnet werden, wobei das Ende, das mit dem Dichtelement in einer Wirkverbindung steht als Basis bezeichnet wird.

Um eine gute Filterwirkung und ebenso eine gute Reinigungswirkung der Filtervorrichtung zu erzielen, hat es sich als vorteilhaft erwiesen, wenn die Rückhalteelemente sich vom Dichtelement ausgehend in einer radialen Richtung zum Mittelpunkt des Filterelements bzw. in Richtung Mittelachse der Rohrleitung fortbilden.

Es ist zweckmäßig, wenn eine Innenkontur und/oder eine Außenkontur des Dichtelements einen zumindest weitestgehend kreisförmigen Querschnitt aufweist.

Die meisten Rohrquerschnitte und somit auch die meisten Querschnitte eines an einem Rohr angeschlossenen Flansches sind rund. Um eine gute Abdichtung einer Verbindungsstelle, insbesondere einer Flanschverbindung zu erzeugen und gleichzeitig möglichst wenig Material einzusetzen ist es vorteilhaft, sowohl die Innen- als auch die Außenkontur des Dichtelements entsprechend den Durchmessern des Rohres bzw. des Flansches rund auszugestalten.

Es ist jedoch auch möglich für die Innen- und/oder Außenkontur eine andere Form, insbesondere eine geometrische Form vorzusehen. Dabei ist es nicht erforderlich, dass Innen- und Außenkontur die gleiche Form aufweisen.

Eine vorteilhafte Ausgestaltung sieht vor, dass das wenigstens eine Rückhalteelement oder wenigstens eines der Rückhalteelemente ausgehend vom Dichtelement sich in Ausbreitungsrichtung hin in wenigstens einer Dimension verjüngt.

Um ein möglichst widerstandsfähiges und langlebiges Filterelement herzustellen hat es sich als vorteilhaft erwiesen die Verbindungsstelle zwischen Dichtelement und Rückhalteelement und insbesondere die Basis des Rückhalteelements verstärkt auszubilden. Würde sich die Verstärkung des Rückhalteelements bis zur Spitze des Rückhaltelements durchgehend fortsetzen so würde die durchströmbare Querschnittsfläche der Filtervorrichtung zu klein, um auch große Wassermassen bewältigen zu können. Aus diesem Grund ist es vorteilhaft, dass sich das Rückhaltelement insbesondere, in Draufsicht des Filterelements betrachtet, in senkrechter Richtung zur Ausbreitungsrichtung des Rückhalteelements verjüngt. Somit wird eine stabile Basis des Rückhalteelements geschaffen und die durchströmbare Querschnittsfläche ideal verringert.

Vorteilhafterweise sind das Dichtelement und das wenigstens eine Rückhalteelement oder wenigstens eines der vorhandenen Rückhalteelemente einteilig ausgebildet.

Die einteilige bzw. einstückige Ausgestaltung des Dichtelements und der daran angeordneten Rückhalteelemente ermöglicht ein einfaches und zeitsparendes Verbauen der Filtervorrichtung , ohne dass zuvor die einzelnen Rückhalteelemente mit dem Dichtelement verbunden werden müssen.

Darüber hinaus werden Bereiche vermieden die unter Umständen anfälliger für Verschleiß sind.

Es ist zweckmäßig, wenn das wenigstens eine Rückhalteelement oder wenigstens eins der vorhandenen Rückhalteelemente mit einer Durchströmungsrichtung einen Winkel ungleich 90° einschließt.

Versuche haben ergeben, dass eine verbesserte Reinigungswirkung der Rückhalteelemente erzielt wird, wenn die Rückhalteelemente in einem Winkel zu Durchströmungsrichtung angeordnet sind. Die Ausrichtung der Rückhalteelemente erfolgt derart, dass die Spitzen der Rückhalteelemente in Richtung der Reinigungsstromrichtung bzw. entgegengesetzt der Filterstromrichtung weisen. Folglich weisen die Spitzen der Rückhalteelemente weg von einer Pumpe einer Förderanlage.

Vorteilhafte Ausgestaltungen weisen einen Winkel zwischen 10° und 85°, bevorzugt zwischen 20° und 75°, besonders bevorzugt zwischen 30° und 60°.

Eine vorteilhafte Ausgestaltung sieht vor, dass das Filterelement ein Schalelement aufweist, das derart in einem Übergangsbereich zwischen Dichtelement und dem wenigstens einem Rückhalteelement oder wenigstens einem der Rückhalteelemente anordbar ist, dass eine kraft-, form- und/oder stoffschlüssige Verbindung zwischen dem Schalelement und dem wenigstens einen Rückhalteelement oder wenigstens einem der Rückhalteelemente entsteht und aufgrund der vom Schalelement ausgeübten Kraft das wenigstens eine Rückhalteelement oder wenigstens eines der Rückhalteelemente derart abgelenkt und/oder verformt wird, dass dieses einen Winkel ungleich 90° mit der Durchströmungsrichtung einschließt.

Durch die Verwendung eines Schalelements kann eine Schrägstellung der Rückhalteelemente, bei der die Rückhalteelemente mit der Durchströmungsrichtung einen Winkel einschließen, auch noch nachträglich mit Filterelementen erreicht werden, bei denen die Rückhalteelemente nicht bereits produktionsbedingt einen Winkel mit dem Dichtelement einschließen.

Als Schalelement ist dabei beispielsweise ein Winkeleisen oder ein ähnliches Element denkbar, das derart mit der Filtervorrichtung zwischen zwei Flanschen verbaut wird, dass ein erster Bereich des Schalelements, beispielweise des Winkeleisens oder eines ähnlichen Elements, plan mit dem Dichtelement zwischen den Flanschen angeordnet ist und der zu diesem Bereich abgewinkelte Bereich des Schalelements, beispielsweise des Winkeleisens oder eines ähnlichen Elements, das wenigstens eine Rückhalteelement oder wenigstens eins der vorhandenen Rückhalteelemente auslenkt.

Es ist auch möglich, dass das Schalelement, beispielsweise ein Winkeleisen oder ein ähnliches Element, als Verbindungselement zwischen dem Dichtelement und dem Rückhalteelement dient, wobei das Dichtelement an einem der zueinander abgewinkelten Bereiche des Schalelements, beispielsweise des Winkeleisens oder eines ähnlichen Elements, angeordnet ist und das wenigstens eine Rückhalteelement oder wenigstens eins der vorhandenen Rückhalteelemente an dem anderen Bereich.

Es können auch mehrere Schalelemente, die insbesondere abschnittsweise entlang des Umfangs der Filtervorrichtung, insbesondere wenigstens eines Filterelements, angeordnet sind, verbaut sein.

Darüber hinaus ist es konstruktiv möglich lediglich einzelne Rückhalteelemente schräg zur Durchströmungsrichtung zu stellen.

Zweckmäßigerweise weist wenigstens eines der Rückhalteelemente eine zu wenigstens einem anderen Rückhalteelement unterschiedliche Länge und/oder Breite auf.

Die Rückhalteelemente eines Filterelements müssen nicht alle identisch ausgeformt sein. Vielmehr ist es zweckmäßig je nach Einsatzzweck und zu erreichendem Erfolg die einzelnen Rückhalteelemente unterschiedlich, insbesondere in Länge und Breite, gesehen in Draufsicht, auszugestalten. Es sind auch unterschiedliche Formen für die Rückhalteelemente innerhalb eines Filterelements denkbar.

Es ist vorteilhaft, wenn wenigstens zwei Filterelemente in Durchströmungsrichtung hintereinander anordbar sind, wobei die Filterelemente gleichartig oder unterschiedlich aufgebaut sein können.

Je nach Einsatzzweck und/oder Grad der Belastung der Flüssigkeit mit Sperr- und/oder Feststoffen kann es notwendig sein mehr als ein Filterelement in der Filtervorrichtung zu verbauen. Dabei können die einzelnen Filterelemente kaskadenförmig in Durchströmungsrichtung gesehen hintereinander angeordnet werden.

So ist es zum Beispiel möglich durch die Anordnung eines Filterelements mit langen Rückhalteelementen und einem in Filterstromrichtung gesehen dahinter angeordnetem Filterelement mit kleineren, steiferen Rückhalteelementen eine Art Stützwirkung für das in Filterstromrichtung vorhergehende Filterelement zu erzeugen, die sich in Reinigungsstromrichtung nicht auswirkt.

Eine vorteilhafte Ausgestaltung sieht vor, dass zumindest ein Filterelement gegenüber wenigstens einem anderen Filterelement einen Winkelversatz um die Durchflussrichtung aufweist.

Durch einen Winkelversatz der einzelnen Filterelemente gegeneinander um die Durchflussrichtung ist es möglich, die einzelnen Rückhalteelemente versetzt, teil-überlagernd und/oder überlagernd anzuordnen. Je nach Stellung der Rückhalteelemente verschiedener Filterelemente zueinander werden unterschiedliche strömungsphysikalische Effekte, beispielsweise Wirbel, erzeugt, die bei gewissen Anwendungsfällen vorteilhaft sein können.

Vorteilhafterweise weist das in Filterstromrichtung vorhergehende Filterelement einen größeren durchströmbaren Querschnitt auf, als das Nachfolgende.

Um eine möglichst effektive Filterung der sperr- und/oder feststoffhaltengen Flüssigkeit zu erreichen hat sich eine kaskadenartige Anordnung der Filterelemente als vorteilhaft herausgestellt, bei der in Filterstromrichtung gesehen zunächst möglichst kleine und stabile Rückhalteelemente in einem Filterelement mit vergleichsweise großer durchströmbarer Querschnittsfläche verbaut werden, um die gröbsten Sperr- und/oder Feststoffe zurückzuhalten und mit Durchlaufen der Filtervorrichtung in Filterstromrichtung immer feinere Rückhalteelemente in einem Filterelement mit vergleichsweise kleiner durchströmbarer Querschnittsfläche zu verbauen.

Des Weiteren umfasst die Erfindung eine Förderanlage, insbesondere Abwasserhebeanlage, zur mehrgerichteten, insbesondere zweigerichteten, Förderung von sperr- und/oder feststoffhaltigen Flüssigkeiten, insbesondere Abwässern, umfassend eine Filtervorrichtung zur Filterung von sperr- und/oder feststoffhaltigen Flüssigkeiten, insbesondere Abwässern umfassend wenigstens ein Filterelement, wobei das wenigstens eine Filterelement wenigstens ein Rückhalteelement umfasst und die Filtervorrichtung von der sperr- und/oder feststoffhaltigen Flüssigkeit durchströmbar ist, wobei das Filterelement ein Dichtelement, insbesondere zum Abdichten einer Flanschverbindung zwischen zwei Flanschen, aufweist und das Filterelement in einer Durchströmungsrichtung eine geringe Ausdehnung bzw. das Filterelement eine geringe Dicke, bevorzugt zwischen 1 mm und 30 mm, besonders bevorzugt zwischen 2 mm und 20 mm und ganz besonders bevorzugt zwischen 3 mm und 10 mm, aufweist.

Vorteilhafterweise ist die Filtervorrichtung räumlich zwischen einer Pumpe und einem Sperrstoffsammelraum anordbar.

Um die Pumpe vor einer nachteiligen Beeinflussung oder gar einer Beschädigung zu schützen, ist es sinnvoll die Filtervorrichtung in Filterstromrichtung gesehen vor der Pumpe anzuordnen. Darüber hinaus ist es sinnvoll um mittels der Filtervorrichtung eine möglichst große Menge an Sperr- und/oder Feststoffen zurück zu halten ohne die Rohrleitung zu verstopfen in Filterstromrichtung gesehen vor die Filtervorrichtung einen Sperrstoffsammelraum anzuordnen, der die Sperr- und/oder Feststoffe aufnimmt und bei Umkehr der Strömungsrichtung die angestauten Sperr- und/oder Feststoffe in Reinigungsstromrichtung wieder abgibt.

Es ist zweckmäßig, wenn die Filtervorrichtung räumlich zwischen zwei Flanschen, insbesondere mittels einer Quetschverbindung, Schraubverbindung Klemmverbindung und/oder Steckverbindung, anordbar ist.

Die Positionierung zwischen zwei Flanschen der Förderanlage bietet den Vorteil, dass die Filtervorrichtung im Bedarfsfall leicht gereinigt, gewartet und/oder ausgetauscht werden kann. Außerdem sind Flanschverbindungen oftmals von außen leicht zugänglich, was die Handhabung positiv beeinflusst. Zudem ermöglicht es eine derartige Positionierung die Filtervorrichtung bei nahezu jeder Förderanlage nachzurüsten, die über eine Flanschverbindung verfügt, welche mittels einer Dichtung abgedichtet wird.

Eine vorteilhafte Ausgestaltung sieht vor, dass die Filtervorrichtung formschlüssig an den zwei Flanschen anliegt.

Für eine sichere und verlässliche Abdichtung der Verbindung zwischen zwei Flanschen ist es vorteilhaft, wenn die Filtervorrichtung, insbesondere das Dichtelement der Filtervorrichtung formschlüssig an den Flanschen anliegt, um ein heraustreten der Flüssigkeit zwischen den Flanschen zu verhindern.

Zweckmäßigerweise umfasst die Förderanlage einen Sammelbehälter, in welchen die zumindest teilweise durch die Filtervorrichtung vorgereinigte Flüssigkeit einleitbar ist und aus welchem die zumindest teilweise vorgereinigte Flüssigkeit durch Umkehr der Förderrichtung der Förderanlage herauspumpbar ist.

Weiterbildungen und vorteilhafte Ausgestaltungen der Erfindung können sich auch aus den nachfolgenden Beschreibungen von Ausführungsbeispielen ergeben, die in der Zeichnung dargestellt sind. In dieser zeigen:
- Fig. 1: eine Draufsicht einer aus einem einzigen Filterelement bestehenden Filtervorrichtung,
- Fig. 2: einen Querschnitt einer aus einem einzigen Filterelement bestehenden Filtervorrichtung,
- Fig. 3: eine aus einem einzigen Filterelement bestehenden Filtervorrichtung zwischen zwei Flanschen,
- Fig. 4: eine Filtervorrichtung mit mehreren Filterelementen,
- Fig. 5: eine Explosionszeichnung eines Ausschnitts einer Abwasserhebeanlage.

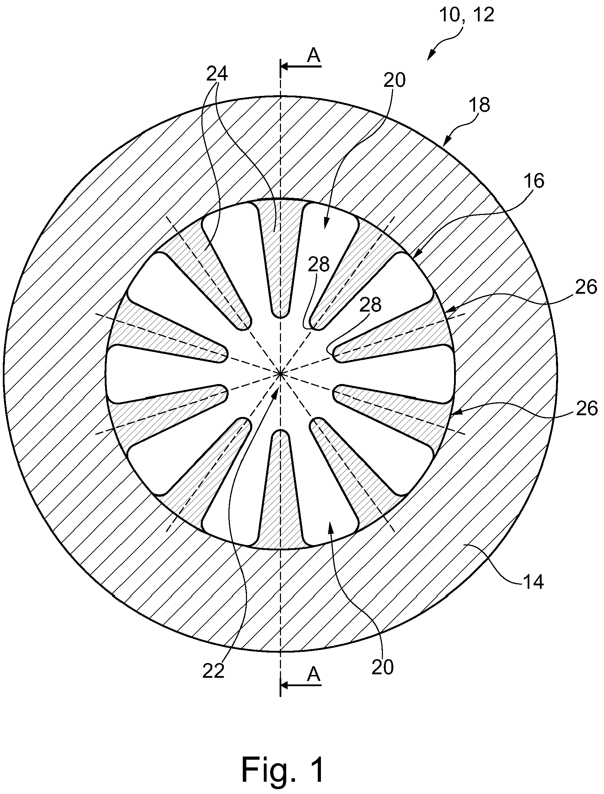

In Fig. 1 ist eine erfindungsgemäße Filtervorrichtung 10 mit lediglich einem Filterelement 12 in einer Draufsicht dargestellt. In dieser Ausführungsform weißt das Dichtelement 14 eine runde Innen- und Außenkontur 18 auf. Es ist jedoch auch möglich, dass die Innen- und/oder Außenkontur 18 eine andere Form aufweisen. Auch müssen Innen- und Außenkontur 18 nicht die gleiche Form haben. Die Innenkontur 16 begrenzt die durchgehende Öffnung 20 des Dichtelements 14. Ausgehend von der Innenkontur 16 des Dichtelements 14 bilden sich in radialer Richtung zu einem Mittelpunkt 22 gerichtet Rückhalteelemente 24 aus, welche die durchgehende Öffnung 20 des Dichtelements 14 bzw. des Filterelements 12 zusätzlich begrenzen.

In dieser Ausführungsform sind das Dichtelement 14 und die daran angeordneten Rückhalteelemente 24 einteilig bzw. einstückig und aus demselben Material, insbesondere einem elastischen Material ausgebildet. Der Übergang zwischen Dichtelement 14 und der Basis 26 des Rückhalteelements 24 ist fließend. Dabei sind die Rückhalteelemente 24 an ihrer Basis 26, die sich direkt an die Innenkontur 16 des Dichtelements 14 anschließt, breiter ausgebildet und verjüngen sich in radialer Richtung zu einer Spitze 28.

In diesem Ausführungsbeispiel weisen die Rückhalteelemente 24 eine identische Form auf. Die Form und/oder die Größe einzelner Rückhalteelemente 24 kann jedoch innerhalb eines Filterelements 12 variieren.

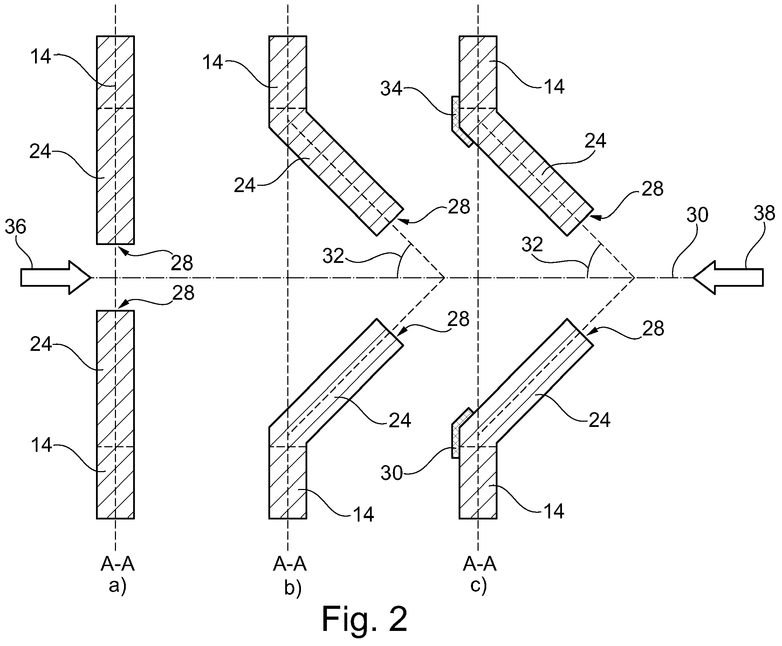

Fig. 2 zeigt einen Querschnitt einer erfindungsgemäßen Filtervorrichtung 10 mit lediglich einem Filterelement 12 entlang der Achse A-A wie diese in Fig. 1 dargestellt ist.

Dabei zeigt Fig. 2 a) eine Ausführungsform eines Filterelements 12, bei dem das Dichtelement 14 und die dargestellten Rückhalteelemente 24 fluchten ausgebildet sind und somit die einzelnen Rückhalteelemente 24 beziehungsweise die dargestellten Abschnitte des Dichtelements 14 auf der Achse A-A liegen. Die Achse A-A ist dabei senkrecht zur Durchströmungsrichtung 30 ausgerichtet.

Demgegenüber zeigt Fig. 2 b) ein einteilig bzw. einstückig ausgebildetes Filterelement 12, bei dem die Rückhalteelemente 24 bereits im Herstellungsprozess des Filterelements 12 derart ausgebildet werden, dass die Rückhalteelemente 24 keine fluchtende Ausrichtung zu den Abschnitten des Dichtelements 14 aufweisen, an welchen die Rückhalteelemente 24 angeordnet sind. Folglich schleißen die Rückhalteelemente 24 mit der Durchströmungsrichtung 30 einen Winkel 32 ungleich 90° ein.

Fig. 2 c) zeigt wie Fig. 2 b) ein Filterelement 12 mit zu dem Abschnitten des Dichtelements 14 nicht fluchtend verlaufenden Rückhalteelementen 24 bzw. mit Rückhalteelementen 24, die einen Winkel 32 ungleich 90° mit der Durchströmungsrichtung 30 einschließen. Im Gegensatz zu Fig. 2 b) kann das Filterelement 12 in diesem Ausführungsbeispiel ein- oder mehrteilig bzw. ein- oder mehrstückig ausgebildet sein. Darüber hinaus wird der Winkel 32 des Rückhalteelements 24 zur Durchströmungsrichtung 30 mittels eines Schalelements 34 ausgebildet, welches im Bereich des Übergangs von Dichtungselement zu Rückhalteelement 24 angeordnet ist.

Sollte das Filterelement 12 mehrteilig- bzw. stückig ausgebildet sein, kann das Schalelement 34 ebenfalls dazu genutzt werden die Rückhalteelemente 24 an dem Dichtungselement zu befestigen. Das Schalelement 34 kann als umlaufendes Ringelement ausgebildet sein, das alle Rückhaltelemente mit dem Dichtelement 14 verbindet, oder aber für jedes Rückhalteelement 24 kann ein einzelnes Schalelement 34 an dem Dichtelement 14 angeordnet sein.

Bei den Ausführungsformen gemäß Fig. 2 b) und c) erfolgt die Ausrichtung der Rückhalteelemente 24 derart, dass die Spitzen 28 der Rückhalteelemente 24 in Richtung der Reinigungsstromrichtung 36 bzw. entgegengesetzt der Filterstromrichtung 38 weisen. Folglich weisen die Spitzen 28 der Rückhalteelemente 24 weg von einer Pumpe 48 einer Förderanlage 41.

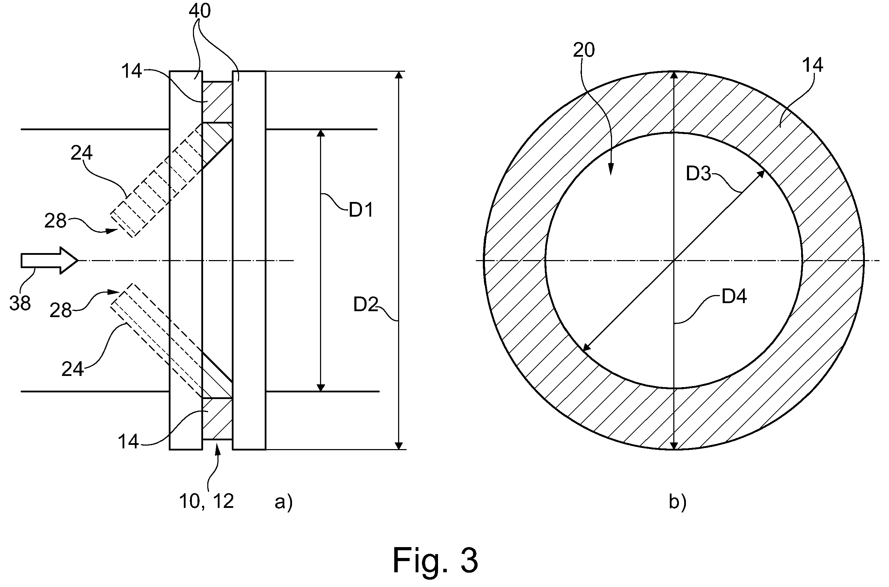

Fig. 3 a) zeigt eine erfindungsgemäße Filtervorrichtung 10 mit lediglich einem Filterelement 12 in einer Querschnittsansicht in einem eingebauten Zustand zwischen zwei Flanschen 40. Dabei weist der Flansch 40 einen Rohrdurchmesser bzw. Innendurchmesser D1 und einem Außendurchmesser D2 auf.

Die Filtervorrichtung 10 ist dabei derart zwischen den Flanschen 40 angeordnet, dass sich das Dichtelement 14 weitestgehend zwischen den Überständen der beiden Flansche 40 befindet und die Rückhalteelemente 24 in einen der Flansche 40 hineinragen. Wobei die Ausrichtung der Rückhalteelemente 24 derart erfolgt, dass die Spitzen 28 der Rückhalteelemente 24 in Richtung der Reinigungsstromrichtung 36 bzw. entgegengesetzt der Filterstromrichtung 38 weisen. Das Dichtelement 14 füllt den Spalt zwischen den beiden Flanschen 40 zumindest weitestgehend vollständig aus und dichtet somit die Flanschverbindung gegen die Umgebung ab.

Um eine sichere Abdichtung des Spalts zwischen den Flanschen 40 zu erzielen und dabei den Strömungsquerschnitt der Rohrleitung bzw. der Flansche 40 nicht unnötig zu verringern, weist das Dichtelement 14, wie in Fig. 3 b) schematisch in einer Draufsicht gezeigt, vorzugsweise einen Durchmesser D3 der Innenkontur 16 auf, der im Bereich des Durchmessers von D1 liegt und einen Durchmesser D4 der Außenkontur 18 auf, der größer als der Durchmesser D1 ist und im Bereich des Durchmessers von D2 liegen kann.

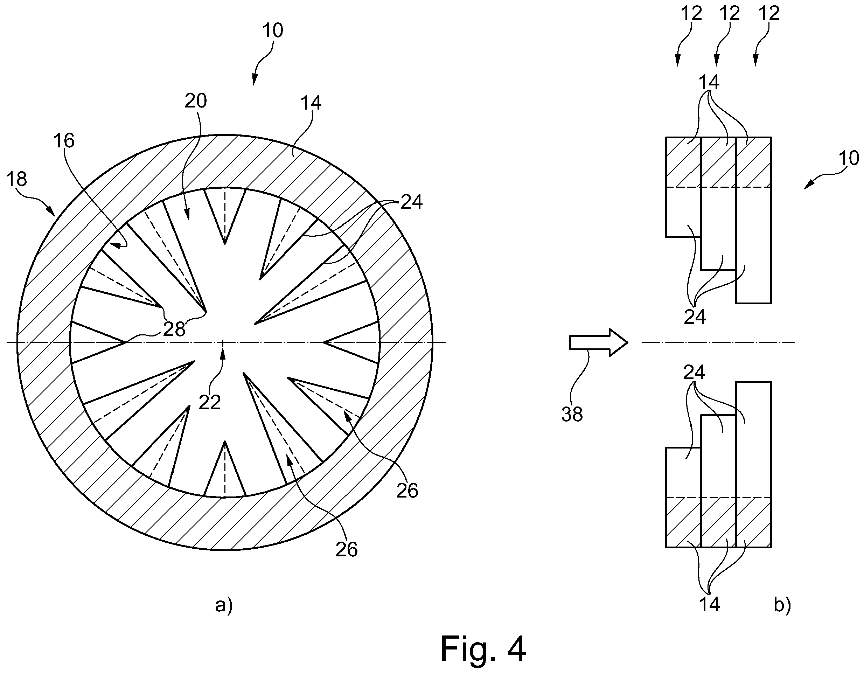

Fig. 4 zeigt eine erfindungsgemäße Filtervorrichtung 10 mit mehreren Filterelementen 12 in einer Draufsicht (siehe Fig. 4 a)) und einer Querschnittsansicht (siehe Fig. 4 b)).

In dieser Ausführungsform ist jedes der vorhandenen Dichtelemente 14 identisch ausgebildet und weist eine runde Innen- und Außenkontur 18 auf. Die Innenkontur 16 begrenzt die durchgehende Öffnung 20 jedes Dichtelements 14. Ausgehend von der Innenkontur 16 jedes Dichtelements 14 bilden sich in radialer Richtung zu einem Mittelpunkt 22 gerichtet Rückhalteelemente 24 aus, welche die durchgehende Öffnung 20 des Dichtelements 14 bzw. des Filterelements 12 zusätzlich begrenzen.

In diesem Ausführungsbeispiel weisen die Rückhalteelemente 24 eines Filterelements 12 eine identische Form auf, wobei die Rückhalteelemente 24 unterschiedlicher Filterelemente 12 im Grunde die gleiche Form, aber eine unterschiedliche Größe aufweisen. Zudem sind die Filterelemente 12 derart angeordnet, dass die Rückhalteelemente 24 um einen Winkel 32 von 30° gegeneinander rotiert sind (siehe Fig. 4 a)). Dagegen sind die Filterelemente 12 in Fig. 4 b) nicht gegeneinander rotiert, um die unterschiedliche Ausgestaltung der Rückhalteelemente 24 zwischen den einzelnen Filterelementen 12 deutlicher hervorzuheben.

Weiterhin werden die Rückhalteelemente 24 in Filterstromrichtung 38 größer, insbesondere Länger, d.h. die Spitze 28 eines solchen Rückhalteelements 24 ist näher am Mittelpunkt 22 als die eines Rückhalteelements 24 eines in Filterstromrichtung 38 gesehen vorhergehenden Filterelements 12.

Des Weiteren sind die in dieser Ausführungsform dargestellten Dichtelemente 14 und die daran angeordneten Rückhalteelemente 24 jeweils einteilig bzw. einstückig und aus demselben Material, insbesondere einem elastischen Material ausgebildet. Der Übergang zwischen Dichtelement 14 und der Basis 26 des Rückhalteelements 24 eines jeden Filterelements 12 ist fließend. Dabei sind die Rückhalteelemente 24 an ihrer Basis 26, die sich direkt an die Innenkontur 16 des Dichtelements 14 anschließt, breiter ausgebildet und verjüngen sich in radialer Richtung zu einer Spitze 28.

Die einzelnen Filterelemente 12 können auch so angeordnet sein, dass sich wenigstens eines der Rückhalteelemente 24 eines Filterelements 12 mit wenigstens einem Rückhalteelement 24 eines anderen Filterelements 12 in Draufsicht überlagern.

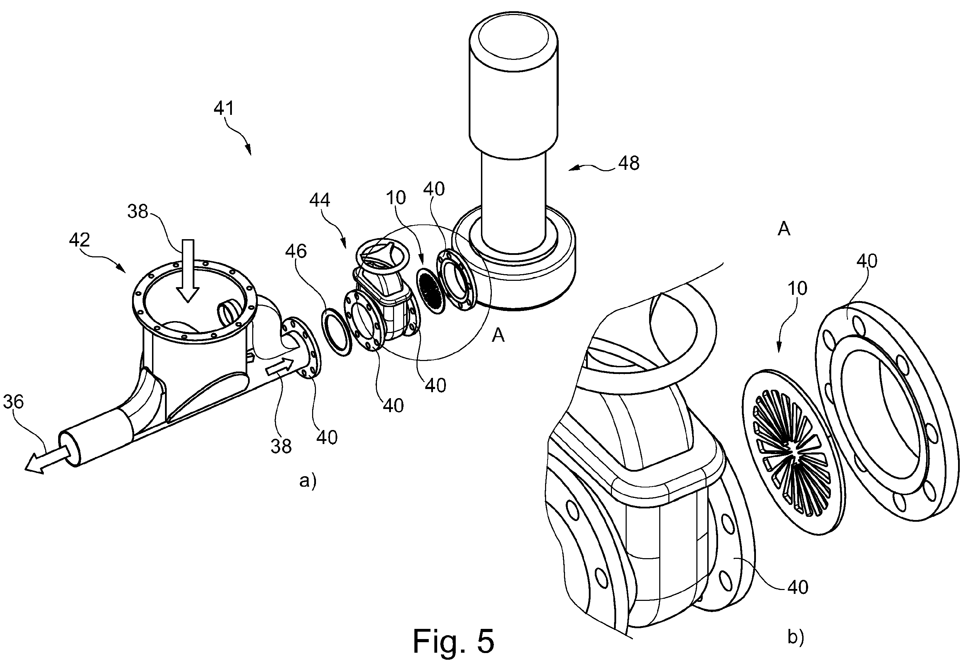

Fig. 5 zeigt eine Explosionszeichnung eines Ausschnitts einer Förderanlage 41, insbesondere einer Abwasserhebeanlage umfassend eine erfindungsgemäße Filtervorrichtung 10, mehrere Flansche 40, einen Sperrstoffsammelraum 42, einen Sperrschieber 44, eine Ringdichtung 46 und eine Pumpe 48.

In Filterstromrichtung 38 gesehen, wird die Abwasserhebeanlage zunächst aus einem Sperrstoffsammelraum 42 und einem sich daran anschließenden Sperrschieber 44 gebildet. Damit keine Flüssigkeit aus den Verbindungsflanschen 40 austreten kann, ist eine Ringdichtung 46 zwischen dem Flansch 40 des Sperrstoffsammelraums 42 und dem Flansch 40 des Sperrschiebers 44 angeordnet. Angrenzend an den Sperrschieber 44 folgt in Filterstromrichtung 38 gesehen die Pumpe 48.

Damit keine Sperr- und/oder Feststoffe in die Pumpe 48 gelangen und keine Flüssigkeit aus den Verbindungsflanschen 40 zwischen Sperrschieber 44 und Pumpe 48 austreten kann, ist die erfindungsgemäße Filtervorrichtung 10 zwischen dem Flansch 40 des Sperrschiebers 44 und dem Flansch 40 der Pumpe 48 angeordnet. Ein weiteres Element einer Abwasserhebeanlage kann ein Sammelbehälter für das zumindest teilweise vorgereinigte Abwasser sein.

Um den Sammelbehälter zu befüllen, strömt das Abwasser in Filterstromrichtung 38 durch die Abwasserhebeanlage. Dabei werden die im Abwasser enthaltenen Sperr- und/oder Feststoffe in den Rückhalteelementen 24 der Filtervorrichtung 10 zurückgehalten und somit aus dem Abwasser herausgefiltert. Das so zumindest teilweise vorgereinigte Abwasser gelangt in den Sammelbehälter.

Sobald der Sammelbehälter einen bestimmten Füllstand erreicht hat, wird das zumindest teilweise vorgereinigte Abwasser mittels der Pumpe 48 aus dem Sammelbehälter herausgepumpt und durchströmt die Abwasserhebeanlage in Reinigungsstromrichtung 36. Beim Durchströmen der Filtervorrichtung 10 werden die zuvor zurückgehaltenen Sperr- und/oder Feststoffe von dem zumindest teilweise vorgereinigten Abwasser mitgenommen und einer Druckrohrleitung des Abwassernetzes zugeführt.

Es wäre auch denkbar, die Ringdichtung 46 zwischen Sperrschieber 44 und Sperrstoffsammelraum 42 ebenfalls durch eine Filtervorrichtung 10 zu ersetzen.

In Fig. 5 b) wird der in Fig. 5 a) markierte Bereich zur Verdeutlichung hervorgehoben.

### Bezugszeichenliste

### (ist Teil der Beschreibung)

- 10: Filtervorrichtung
- 12: Filterelement
- 14: Dichtelement
- 16: Innenkontur
- 18: Außenkontur
- 20: Öffnung
- 22: Mittelpunkt
- 24: Rückhalteelement
- 26: Basis des Rückhalteelements
- 28: Spitze des Rückhalteelements
- 30: Durchströmungsrichtung
- 32: Winkel
- 34: Schalelement
- 36: Reinigungsstromrichtung
- 38: Filterstromrichtung
- 40: Flansch
- 41: Förderanlage
- 42: Sperrstofifsammelraum
- 44: Sperrschieber
- 46: Ringdichtung
- 48: Pumpe
- D1: Innendurchmesser Flansch
- D2: Außendurchmesser Flansch
- D3: Durchmesser Innenkontur Dichtungselement
- D4: Durchmesser Außenkontur Dichtungselement

## Patentansprüche

1. Filtervorrichtung (10) zur Filterung von sperr- und/oder feststoffhaltigen Flüssigkeiten, insbesondere Abwässern umfassend wenigstens ein Filterelement (12), wobei das wenigstens eine Filterelement (12) wenigstens ein Rückhalteelement (24) umfasst und die Filtervorrichtung (10) von der sperr- und/oder feststoffhaltigen Flüssigkeit durchströmbar ist, **dadurch gekennzeichnet, dass** das Filterelement (12) ein Dichtelement (14), insbesondere zum Abdichten einer Flanschverbindung zwischen zwei Flanschen (40), aufweist und das Filterelement (12) in einer Durchströmungsrichtung (30) eine geringe Ausdehnung bzw. das Filterelement (12) eine geringe Dicke aufweist.

2. Filtervorrichtung (10) nach Anspruch 1, **dadurch gekennzeichnet, dass** das Filterelement (12) in einer Durchströmungsrichtung (30) eine Ausdehnung bzw. das Filterelement (12) eine Dicke zwischen 1 mm und 30 mm, besonders bevorzugt zwischen 2 mm und 20 mm und ganz besonders bevorzugt zwischen 3 mm und 10 mm aufweist.

3. Filtervorrichtung (10) nach einem der Ansprüche 1 bis 2, **dadurch gekennzeichnet, dass** wenigstens das Dichtelement (14) aus einem elastischen Material, insbesondere Gummi, vorteilhafterweise aus EPDM, besteht.

4. Filtervorrichtung (10) nach einem der Ansprüche 1 bis 3, **dadurch gekennzeichnet, dass** das Dichtelement (14) eine durchgehende Öffnung (20) aufweist und dass das wenigstens eine Rückhalteelement (24) oder wenigstens eines der Rückhalteelemente (24) innerhalb dieser durchgehenden Öffnung (20) derart anordbar ist, dass eine von der Flüssigkeit durchströmbare Querschnittsfläche der durchgehenden Öffnung (20) verringert wird.

5. Filtervorrichtung (10) nach Anspruch 4, **dadurch gekennzeichnet, dass** das wenigstens eine Rückhalteelement (24) oder wenigstens eines der vorhandenen Rückhalteelemente (24) derart innerhalb der durchgehenden Öffnung (20) anordbar ist, dass dieses von einer Innenkontur (16) des Dichtelements (14) ausgehend sich radial in Richtung eines Mittelpunkts (22) des Dichtelements (14) fortbildet.

6. Filtervorrichtung (10) nach einem der Ansprüche 4 bis 5, **dadurch gekennzeichnet, dass** eine Innenkontur (16) und/oder eine Außenkontur (18) des Dichtelements (14) einen zumindest weitestgehend kreisförmigen Querschnitt aufweist.

7. Filtervorrichtung (10) nach einem der Ansprüche 1 bis 6, **dadurch gekennzeichnet, dass** das wenigstens eine Rückhalteelement (24) oder wenigstens eines der Rückhalteelemente (24) ausgehend vom Dichtelement (14) sich in Ausbreitungsrichtung hin in wenigstens einer Dimension verjüngt.

8. Filtervorrichtung (10) nach einem der Ansprüche 1 bis 7, **dadurch gekennzeichnet, dass** das Dichtelement (14) und das wenigstens eine Rückhalteelement (24) oder wenigstens eines der vorhandenen Rückhalteelemente (24) einteilig ausgebildet sind.

9. Filtervorrichtung (10) nach einem der Ansprüche 1 bis 8, **dadurch gekennzeichnet, dass** das wenigstens eine Rückhalteelement (24) oder wenigstens eins der vorhandenen Rückhalteelemente (24) mit einer Durchströmungsrichtung (30) einen Winkel (32) ungleich 90° einschließt.

10. Filtervorrichtung (10) nach einem der Ansprüche 1 bis 9, **dadurch gekennzeichnet, dass** das Filterelement (12) ein Schalelement (34) aufweist, das derart in einem Übergangsbereich zwischen Dichtelement (14) und dem wenigstens einem Rückhalteelement (24) oder wenigstens einem der Rückhalteelemente (24) anordbar ist, dass eine kraft-, form- und/oder stoffschlüssige Verbindung zwischen dem Schalelement (34) und dem wenigstens einen Rückhalteelement (24) oder wenigstens einem der Rückhalteelement e(24) entsteht und aufgrund der vom Schalelement (34) ausgeübten Kraft das wenigstens eine Rückhalteelement (24) oder wenigstens eines der Rückhalteelemente (24) derart abgelenkt und/oder verformt wird, dass dieses einen Winkel (32) ungleich 90° mit der Durchströmungsrichtung (30) einschließt.

11. Filtervorrichtung (10) nach einem der Ansprüche 1 bis 10, **dadurch gekennzeichnet, dass** wenigstens eines der Rückhalteelemente (24) eine zu wenigstens einem anderen Rückhalteelement (24) unterschiedliche Länge und/oder Breite aufweist.

12. Filtervorrichtung (10) nach einem der Ansprüche 1 bis 11, **dadurch gekennzeichnet, dass** wenigstens zwei Filterelemente (12) in Durchströmungsrichtung (30) hintereinander anordbar sind, wobei die Filterelemente (12) gleichartig oder unterschiedlich aufgebaut sein können.

13. Filtervorrichtung (10) nach Anspruch 12, **dadurch gekennzeichnet, dass** zumindest ein Filterelement (12) gegenüber wenigstens einem anderen Filterelement (12) einen Winkelversatz um die Durchflussrichtung aufweist.

14. Förderanlage (41), insbesondere Abwasserhebeanlage, zur mehrgerichteten, insbesondere zweigerichteten, Förderung von sperr- und/oder feststoffhaltigen Flüssigkeiten, insbesondere Abwässern, umfassend eine Filtervorrichtung (10) zur Filterung von sperr- und/oder feststoffhaltigen Flüssigkeiten, insbesondere Abwässern umfassend wenigstens ein Filterelement (12), wobei das wenigstens eine Filterelement (12) wenigstens ein Rückhalteelement (24) umfasst und die Filtervorrichtung (10) von der sperr- und/oder feststoffhaltigen Flüssigkeit durchströmbar ist, **dadurch gekennzeichnet, dass** das Filterelement (12) ein Dichtelement (14), insbesondere zum Abdichten einer Flanschverbindung zwischen zwei Flanschen (40), aufweist.

15. Förderanlage (41) nach Anspruch 14, **dadurch gekennzeichnet, dass** die Filtervorrichtung (10) räumlich zwischen einer Pumpe (48) und einem Sperrstoffsammelraum (42) anordbar ist.

16. Förderanlage (41) nach einem der Ansprüche 14 bis 15, **dadurch gekennzeichnet, dass** die Filtervorrichtung (10) räumlich zwischen zwei Flanschen (40), insbesondere mittels einer Quetschverbindung, Schraubverbindung Klemmverbindung und/oder Steckverbindung, anordbar ist.

17. Förderanlage (41) nach Anspruch 16, **dadurch gekennzeichnet, dass** die Filtervorrichtung (10) formschlüssig an den zwei Flanschen (40) anliegt.

18. Förderanlage (41) nach einem der Ansprüche 14 bis 17, **dadurch gekennzeichnet, dass** die Förderanlage (41) einen Sammelbehälter umfasst, in welchen die zumindest teilweise durch die Filtervorrichtung (10) vorgereinigte Flüssigkeit einleitbar ist und aus welchem die zumindest teilweise vorgereinigte Flüssigkeit durch Umkehr der Förderrichtung der Förderanlage (41) herauspumpbar ist.
